Europäisches Patentamt

European Patent Office

Office européen des brevets

(19)

(11) Publication number: **0 075 051**
**B1**

## EUROPEAN PATENT SPECIFICATION

(12)

(45) Date of publication of patent specification: **26.11.86**

(51) Int. Cl.⁴: **B 29 C 45/33, A 46 B 1/00**

(21) Application number: **81304355.1**

(22) Date of filing: **22.09.81**

(54) **Apparatus for making at least part of a miniature make-up brush.**

(43) Date of publication of application:
**30.03.83 Bulletin 83/13**

(45) Publication of the grant of the patent:
**26.11.86 Bulletin 86/48**

(84) Designated Contracting States:
**BE CH DE FR IT LI LU NL**

(56) References cited:
**FR-A-1 555 983**
**GB-A- 750 248**
**GB-A- 868 957**
**GB-A- 887 569**
**GB-A- 976 255**
**US-A-4 090 687**

(73) Proprietor: **Cole, Rodney David**
**24 Pine Walk**
**Cobham Surrey (GB)**

(72) Inventor: **Cole, William Edward**
**Residence Europa**
**Monte Carlo (MC)**

(74) Representative: **Wright, Peter David John et al**
**R.G.C. Jenkins & Co. 12-15, Fetter Lane**
**London EC4A 1PL (GB)**

Courier Press, Leamington Spa, England.

EP 0 075 051 B1

## Description

The present invention relates to apparatus for making at least part of a miniature make-up brush having a stem and a plurality of bristles extending outwardly of the stem at different angles.

Up to the present, such make-up brushes, which are used for example for applying mascara, have been made by a process which involves first separately forming the bristles and a wire stem in the shape of a hair pin, assembling the bristles manually with the stem with the bristles located between the two limbs thereof, and twisting the stem to secure the bristles thereto, the stem thus forming a support for the bristles which can be attached to a handle. The known process is cumbersome and involves a considerable amount of labour. Accordingly the costs of known make-up brushes are relatively high.

Broadly, the invention is directed at the problem of improving the manufacture of miniature brushes for applying make-up so that such brushes may be reliably and efficiently made at low cost.

The invention provides apparatus for making at least part of a miniature make-up brush having a stem and a plurality of bristles extending outwardly of the stem at different angles, characterised by a mould into which molten plastics material may be injected for forming the brush, said mould comprising first and second mould members defining between them a major mould cavity which is elongated to form said stem of the brush, said first and second members being separable to permit opening of said major cavity for removal of a formed brush; at least one of said members comprising a plurality of separable elements which are immovably secured relative to each other, each said separable element having a surface which extends generally longitudinally of said major cavity and which is in abutment with an adjacent said surface of an adjacent said element, each pair of said abutting surfaces defining between them a row of minor cavities in communication with said major cavity, said rows of minor cavities extending outwardly of said major cavity at different angles for forming said rows of bristles of said brush; and means for effecting relative separating movement between a formed said brush and said at least one member with said elements thereof maintained immovably secured relative to each other for removing the bristles of said formed brush from said minor cavities, said elements being separable from each other to permit removal of broken bristles from said minor cavities.

Accordingly, utilizing the apparatus of the invention, miniature brushes for applying make-up may be formed by an injection moulding process. Since the bristles of a miniature make-up brush are necessarily extremely fine it is to be expected that from time to time a bristle will break off in its bristle forming cavity during removal of a formed brush from the mould. The construction of the mould in accordance with the invention makes it possible easily to remove such broken bristles, minimizing the time for which the apparatus is inoperable.

It is preferred that one of each pair of abutting surfaces should be formed with recesses for defining the minor cavities and the other of said abutting surfaces should be plane. With this arrangement, the mould may be particularly economically formed since precise alignment between the members on which the abutting surfaces are provided does not have to be made. Also, the recesses, which are preferably tapered so as to form tapered bristles, may be much more easily formed than, for example, boring blind holes to create bristle forming cavities.

Applicants acknowledge that numerous proposals have been made in the prior art for forming brushes by injection moulding. However, none of the prior art proposals is suitable for forming miniature brushes as needed for the application of make-up. Thus, for example, GB—A—868957 discloses a mould for forming a brush in which the bristles are all parallel. This mould is intended for forming relatively large brushes, such as scrubbing brushes, which would not be suitable for the application of make-up. GB—A—750248 discloses a mould for forming a hair brush in which relatively large bristles project from the stem at different angles. The mould includes two types of bristle forming cavity. One type consists of blind tapered bores located in a mould element which is retractable along the axis of the bore for disengaging the mould element from the bristle and the other type is defined between surfaces of adjacent mould elements which are in abutment during moulding but which are parted for removing the brush from the mould. This disclosure only contemplates the manufacture of brushes having relatively rigid bristles which dictates the need for movement of the mould element along the axis of the blind bores as mentioned above which in turn requires the provision of complex driving means for these mould elements. Accordingly, it can be seen that neither GB—A—868957 nor GB—A—750248 is concerned with the problem of improving the art of manufacturing miniature brushes for the application of make-up and neither discloses the combination of features provided by the invention whereby such miniature brushes may be produced by injection moulding. For example, if an attempt were made to produce miniature brushes using the mould of GB—A—750248, the apparatus would become unusable for long periods of time whenever a bristle breaks off in one of the blind bores.

The invention is described further by way of example with reference to the accompanying drawings in which:

Fig. 1 is a side view of a brush according to one embodiment of the present invention;

Fig. 2 is a further side view of the brush shown in Fig. 1 rotated 90° about its axis;

Fig. 3 is an end view of the brush shown in Figs. 1 and 2 with a handle attached;

Fig. 4 is a perspective view of a bristle;

Fig. 5 is a transverse section through part of an assembled mould for producing the brush;

Fig. 6 is a perspective view of part of the mould in the disassembled condition;

Fig. 7 is a section through the mould shown disassembled for removal of the brush.

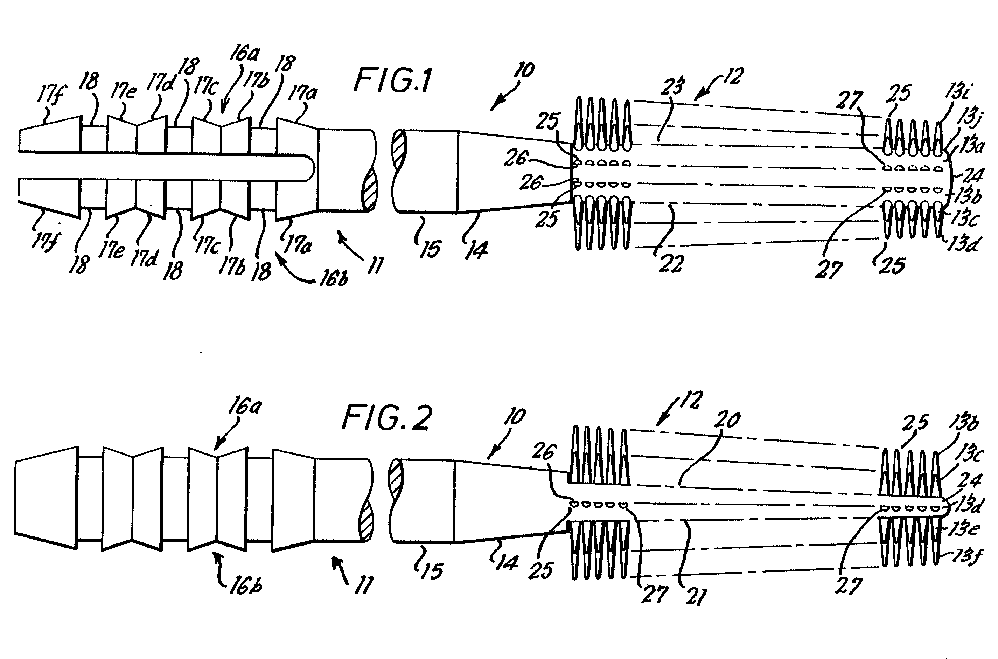

Referring to the drawings, the brush 10 shown in Figs. 1 to 3 is injection moulded from a suitable synthetic plastics material and comprises a stem 11 a head 12 integral with the stem 11 and ten rows of bristles 13a to 13j extending longitudinally of the head 12.

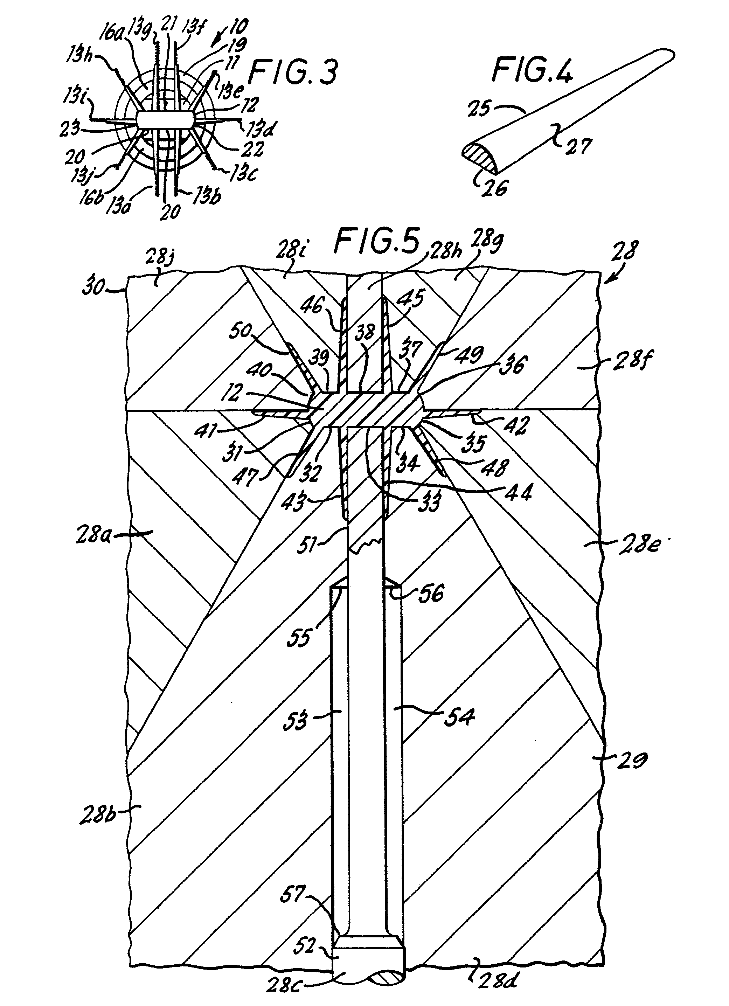

The stem 11 is connected to the head 12 by means of a cylindrical neck portion 14 which tapers outwardly towards a cylindrical body portion 15. The body portion 15 is connected to identical spaced end portions 16a and 16b extending parallel to each other. The portions 16a and 16b are each provided with arcuate lugs 17a and 17f in the form of truncated conical part-annuli, each lug 17 facing in a direction opposite to its neighbour and two pairs of lugs 17b and 17c and 17d and 17e adjoining each other. The pairs of lugs 17b and 17c and 17d and 17e are spaced from each other and from end lugs 17a and 17f by arcuate portions 18. The portions 16a and 16b are adapted to flex relative to each other and as shown in Fig. 3 can be snap fitted within a bore of a cylindrical handle 19 having corresponding portions within the bore to locate the shoulders formed by the lugs 17.

The head 12 is of generally rectangular section with parallel upper and lower walls 20 and 21 and curved side walls 22 and 23. As shown in Fig. 1 the tip 24 of head 12 is slightly curved between the walls 22 and 23 and of pronounced curvature between the walls 20 and 21 as shown in Fig. 2. As also shown in Fig. 2, the thickness of the head between the walls 20 and 21 increases from its tip 24 rearwardly.

Projecting outwardly from the periphery of the head 12 are ten rows 13a to 13j of individual bristles 25, the rows extending longitudinally of the brush head in a spoke-like formation around the periphery of the head 12. The bristles in the rows 13a and 13b and 13f and 13g are arranged parallel to each other and each row extends outwardly at right angles from the respective side wall 20 and 21 of the head 12. The bristles in rows 13a and 13g and 13b and 13f are aligned with each other as shown in Fig. 3. Rows 13d and 13i are also aligned and respectively extend outwardly from the side walls 22 and 23 of the head 12 at right angles to the bristles in the rows 13a, 13b, 13f and 13g. Rows 13c and 13j also extend outwardly and at an acute angle to side wall 20, row 13c being located between rows 13b and 13d and row 13j between rows 13a and 13i. Similarly rows 13e and 13h extend outwardly from and at an acute angle to side wall 21, row 13e being located between rows 13d and 13f and row 13h being located between rows 13g and 13i.

As shown in Figs. 1 and 2 each bristle 25 in each row is defined by a flat face 26 and an arcuate surface 27 both of which extend longitudinally of the bristle 25, the flat face 26 of each bristle being aligned with the longitudinal axis of the head 12. The length of the bristles 25 in each of the rows 13 decreases from the end of the head to its tip 24.

Referring to Fig. 4, the cross-sectional area of each bristle 25 tapers inwardly from its base 26 to its tip 27.

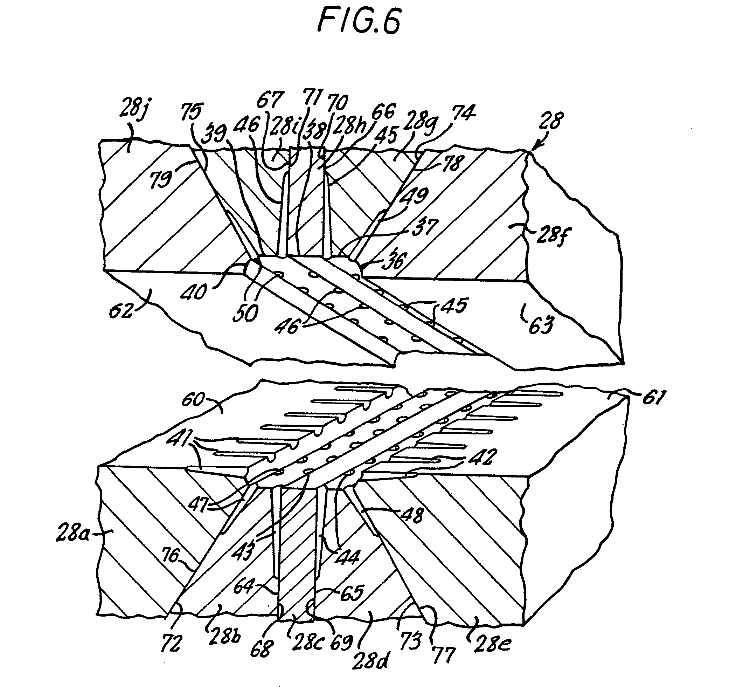

Referring to Figs. 5 and 6 the mould 28 comprises ten mould portions 28a to 28j. Mould portions 28a to e form a lower half 29 of the mould 28 and mould portions 28f to j form an upper half 29 of the mould 28. The portions in each half of the mould 28 are held together after assembly by bolsters (not shown).

The ends 31 to 35 and 36 to 40 of the two-half moulds 29 and 30 each define recesses for forming the brush head cavity 12' when the mould halves 29 and 30 are assembled together. Mould portions 28a, b, d, e, f, g, i and j have side surfaces extending away from their ends at an acute angle to each other, while mould portions 28c and 28h have a plate-like shape with parallel side surfaces. The mould portions 28a and 28e each have longitudinally extending horizontal surfaces 60 and 61 provided with grooves 41 and 42 for forming rows of bristle cavities with the flat longitudinally extending horizontal surfaces 62 and 63 of portions 28j and 28f respectively, the grooves 41 and 42 extending from the ends 31 and 35 respectively of the portions 28a and 28e. Similarly mould portions 28b, 28d, 28g and 28i are each provided with longitudinally extending vertical surfaces 64, 65, 66 and 67 having grooves 43 to 46 extending from their ends 32, 34, 37 and 39 respectively so as to define bristle cavities with the flat longitudinally extending vertical surfaces 68 and 69 and 70 and 71 of portions 28c and 28h respectively. In addition mould portions 28b, 28d, 28g and 28i are provided with longitudinally extending sloping flat surfaces 72, 73, 74 and 75 having grooves 47 to 50 respectively extending from ends 32, 34, 37 and 39 and defining bristle cavities with flat longitudinally extending sloping surfaces 76, 77, 78 and 79 of portions 28a, 28e, 28f and 28j respectively.

As shown more clearly in Fig. 5 mould portion 28c comprises a plate portion 51 which is movable vertically between the two adjacent mould portions 28b and 28d and a cylindrical piston portion 52 connected to the plate portion 51 for moving the plate portion 51. The adjacent surfaces of portions 28b and 28d are provided with part semi-circular grooves 53 and 54 formed with part half-conical shoulders 55 and 56. The grooves 53 and 54 define after assembly a part cylindrical bore in which the piston 52 can move and the shoulders 55 and 56 a part conical shoulder to provide a seat for the shoulder 57 of the piston 52 to limit its extent of travel in the bore. While not shown the mould is provided with a channel or sprue between two adjoining mould portions 28 communicating with the head cavity for the injection of synthetic plastics material thereinto. While also not shown the mould portions 28 are also provided with suitably shaped ends for forming the stem cavity.

In use, the mould is assembled in the form shown in Fig. 5 and molten plastics material is injected into the head cavity and flows into the stem and bristle cavities to form the brush 10.

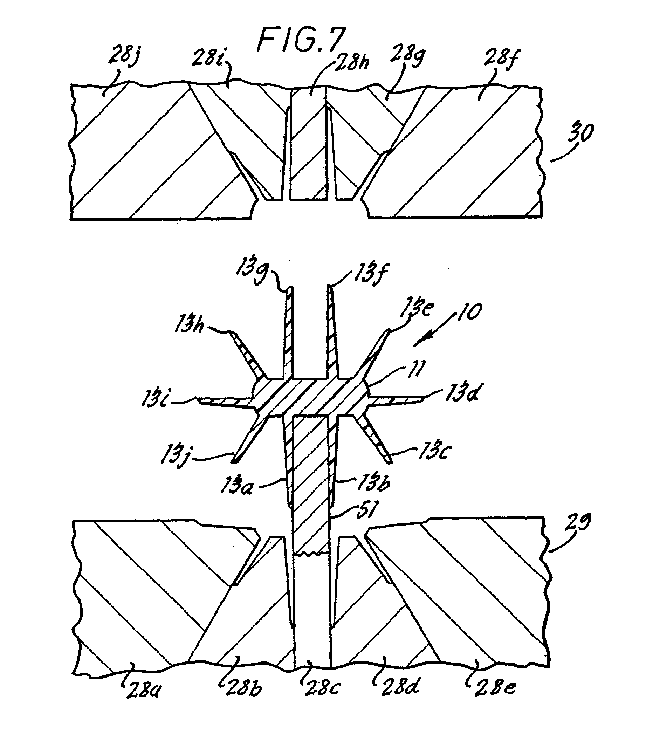

After solidification, the upper mould half 30 is removed from the lower mould half 29, as shown in Fig. 7, the solidified brush remaining in the lower mould half 30. Piston 52 is then moved forward and pushes the brush 10 outwardly from the lower mould half 29. The brush 10 can then be removed from the plate portion 51 of mould portion 28c.

While not shown it will be appreciated that the upper mould half 30 can be fabricated in one piece with a recess solely for forming a brush head cavity and stem. In this case therefore a brush head will be formed with bristle rows only extending over an arc of 180°.

The formation in the mould 28 of the brush head 10 with two parallel vertical rows of bristles in the upper and lower halves of the mould through the provision of the plate-like mould portions 28c and 28h enables the brush 10 to be removed from the mould halves relatively easily.

The brush described with reference to Figs. 1 to 7 can be adapted to produce a brush or element with bristle rows or bristles arranged in any arc between 180° and 360°.

It will be appreciated that the moulds described are relatively simple and cheap to manufacture since there are no expensive and time consuming bristle cavity boring operations involved in their manufacture as is the case with the production of conventional moulds. It is a fairly simple operation to machine grooves into flat surfaces and these will form bristle cavities with adjoining flat surfaces.

Furthermore fine bristle brushes can be produced without recourse to the conventional mould bore pins and the accompanying pin removal equipment.

Various other modifications are possible within the scope of the invention. For example, means other than the injector element 28c could be provided for ejecting the brush from the mould. Also, the grooves defining the bristles of the brush may be arranged otherwise than as shown. For example, the grooves 50 in the member 28i could instead be provided in the member 28j and similar remarks apply to the grooves in the other members.

**Claims**

1. Apparatus for making at least part of a miniature make-up brush (10) having a stem (11) and a plurality of bristles (13a to 13j) extending outwardly of the stem at different angles, characterised by a mould (28) into which molten plastics material may be injected for forming the brush, said mould (28) comprising first and second mould members (29, 30) defining between them a major mould cavity (12') which is elongated to form said stem (12) of the brush, said first and second members (29, 30) being separable to permit opening of said major cavity (12') for removal of a formed brush; at least one of said members (29, 30) comprising a plurality of separable elements (28a, 28b, 28d, 28e; 28f, 28g; 28i, 28j) which are immovably secured relative to each other, each said separable element having a surface (72 to 79) which extends generally longitudinally of said major cavity (12') and which is in abutment with an adjacent said surface of an adjacent said element, each pair of said abutting surfaces (72 to 79) defining between them a row of minor cavities (47 to 50) in communication with said major cavity (12'), said rows of minor cavities (47 to 50) extending outwardly of said major cavity at differnent angles for forming said rows of bristles of said brush; and means (28c) for effecting relative separating movement between a formed said brush (10) and said at least one mould member (29, 30) with said elements (28a to 28j) thereof maintained immovably secured relative to each other for removing the bristles (13a to 13j) of said formed brush (10) from said minor cavities (47 to 50), said elements (28a to 28j) being separable from each other to permit removal of broken bristles from said minor cavities (47 to 50).

2. Apparatus according to claim 1, characterised in that said means for effecting relative separating movement comprises an ejector (28c) movably mounted in said at least one member (29).

3. Apparatus according to claim 2, characterised in that said ejector (28c) has opposite surfaces (68, 69) which cooperate with adjacent surfaces (64, 65) of first and second ones of said elements (28b, 28d) for defining additional rows of said minor cavities (43, 44).

4. Apparatus according to claim 3, characterised in that said opposite surfaces (68, 69) of said ejector (28c) are substantially parallel to each other.

5. Apparatus according to any preceding claim, characterised in that at least one further row of said minor cavities (41, 42) is defined between cooperating surfaces (60 to 63) of said first and second mould members (29, 30) when the mould (28) is closed.

6. Apparatus according to claim 5, characterised in that there are two said further rows (41, 42), said two further rows being at opposite sides of said major cavity (12').

7. Apparatus according to any preceding claim, characterised in that said other mould member (30) also comprises a said plurality of separable elements.

8. Apparatus according to claim 7, characterised in that said other mould member includes a said element (28h) having parallel opposite surfaces (70, 71) defining, with surfaces (66, 67) of adjacent said elements (28g, 28i), additional rows of said minor cavities (45, 46) parallel to each other.

9. Apparatus according to claim 8 as dependent directly or indirectly upon claim 4, characterised in that the additional rows of minor cavities (43, 44) of said one member (29) are opposite the additional rows of minor cavities (45, 46) of said other member (30) said additional rows being arranged so that said minor cavities (43, 44, 45, 46) thereof extend parallel to the direction of separating movement between the formed brush and each of said mould members (29, 30).

10. Apparatus according to any preceding claim, characterised in that for each said row of minor cavities (43 to 50), one of the surfaces (68 to 71, 76 to 79) defining it is plane and the other (64 to 67, 72 to 75) has a row of recesses therein for forming, with said plane surface, said minor cavities.

11. Apparatus according to any preceding claim, characterised in that the lengths of said minor cavities are such as to form a brush having bristles the lengths of which vary along the stem.

12. Apparatus according to any preceding claim, characterised in that said minor cavities are tapered for forming a brush with tapered bristles.

13. Apparatus according to any preceding claim, characterised in that said rows of minor cavities are arranged to form a brush with bristles extending outwardly from the stem at positions distributed through an arc of at least about 180°.

14. Apparatus according to any of claims 1 to 12, characterised in that said rows of minor cavities are arranged for forming a brush with bristles extending from the stem at the positions distributed around an arc of 360°.

**Patentansprüche**

1. Vorrichtung zum Herstellen zumindest eines Teils einer Make-up-Miniaturbürste (10), die einen Stiel (11) und eine Vielzahl von unter verschiedenen Winkeln von dem Stiel nach außen ragenden Borsten (13a ... 13j) aufweist, gekennzeichnet durch eine Form (28), in die geschmolzener Kunststoff zum Formen der Bürste eingespritzt werden kann, wobei die Form (28) ein erstes und ein zweites Formteil (29, 30) aufweist, die miteinander eine längliche Hauptformkammer (12') zum Formen des Bürstenstiels (12) bilden und trennbar sind, um ein Öffnen der Hauptkammer (12') zum Entformen einer fertigen Bürste zu gestatten, wobei mindestens einer der Teile (29, 30) mehrere trennbare relativ zueinander unbewegbar befestigte Elemente (28a, 28b, 28d, 28e; 28f, 28g; 28i, 28j) umfaßt, deren jedes eine generell in Längsrichtung der Hauptkammer (12') verlaufende und auf einer benachbarten Fläche eines benachbarten derartigen Elements liegende Fläche (72 ... 79) aufweist, wobei jedes Paar von aneinanderliegenden Flächen (72 ... 79) miteinander eine Reihe von mit der Hauptkammer (12') in Verbindung stehenden Nebenkammern (47 ... 50) bildet, wobei die Reihen von Nebenkammern (47 ... 50) von der Hauptkammer in unterschiedlichen Winkeln verlaufen, um Reihen von Borsten der Bürste zu bilden, sowie eine Einrichtung (28c) zum Bewirken einer relativen Trennbewegung zwischen einer ausgeformten Bürste (10) und dem mindestens einen Formteil (29, 30), wobei dessen Elemente (28a ... 28j) unbewegbar befestigt relativ zueinander gehalten werden, um die Borsten (13a ... 13j) der ausgeformten Bürste (10) aus den Nebenkammern (47 ... 50) zu entnehmen, wobei die Elemente (28a ... 28j) voneinander trennbar sind, um ein Entfernen von gebrochenen Borsten aus den Nebenkammern (47 ... 50) zu gestatten.

2. Vorrichtung nach Anspruch 1, dadurch gekennzeichnet, daß die eine relative Trennbewegung bewirkende Einrichtung einen Auswerfer (28c) aufweist, der in dem besagten mindestens einen Teil (29) bewegbar montierbar ist.

3. Vorrichtung nach Anspruch 2, dadurch gekennzeichnet, daß das Auswerfer (28c) entgegengesetzte Flächen (68, 69) aufweist, die in Verbindung mit benachbarten Flächen (64, 65) eines ersten und eines zweiten der besagten Elemente (28b, 28d) zusätzliche Reihen von Nebenkammern (43, 44) bilden.

4. Vorrichtung nach Anspruch 3, dadurch gekennzeichnet, daß die entgegengesetzten Flächen (68, 69) des Auswerfers (68c) im wesentlichen parallel zueinander verlaufen.

5. Vorrichtung nach einem der vorhergehenden Ansprüche, dadurch gekennzeichnet, daß mindestens eine weitere Reihe der Nebenkammern (41, 42) zwischen zusammenarbeitenden Flächen (60 ... 63) des ersten und des zweiten Formteils (29, 30) gebildet ist, wenn die Form (28) geschlossen ist.

6. Vorrichtung nach Anspruch 5, dadurch gekennzeichnet, daß zwei weitere Reihen (41, 42) vorhanden sind, die auf entgegengesetzten Seiten der Hauptkammer (12') liegen.

7. Vorrichtung nach einem der vorhergehenden Ansprüche, dadurch gekennzeichnet, daß der besagte andere Formteil (30) ebenfalls eine Vielzahl von trennbaren Elementen aufweist.

8. Vorrichtung nach Anspruch 7, dadurch gekennzeichnet, daß der andere Formteil ein solches Element (28h) mit entgegengesetzten parallelen Flächen (70, 71) aufweist, die mit Flächen (66, 67) der benachbarten Elemente (28g, 28i) parallel zueinander verlaufende zusätzliche Reihen an Nebenkammern (45, 46) bilden.

9. Vorrichtung nach Anspruch 8, soweit dieser direkt oder indirekt auf Anspruch 4 rückbezogen ist, dadurch gekennzeichnet, daß die zusätzlichen Reihen von Nebenkammern (43, 44) des besagten einen Teils (29) den zusätzlichen Reihen von Nebenkammern (45, 46) des anderen Teils (30) gegenüberliegen, wobei die zusätzlichen Reihen derart angeordnet sind, daß ihre Nebenkammern (43, 44, 45, 46) parallel zur Richtung der Trennbewegung zwischen der ausgeformten Bürste und jedem der Formteile (29, 30) verlaufen.

10. Vorrichtung nach einem der vorhergehenden Ansprüche, dadurch gekennzeichnet, daß bei jeder Reihe von Nebenkammern (43 . . . 50) eine der die bildenden Flächen (68 . . . 71, 76 . . . 79) eben ist und die andere (64 . . . 67, 71 . . . 75) eine Reihe von Vertiefungen aufweist, die zusammen mit der ebenen Fläche die Nebenkammern bilden.

11. Vorrichtung nach einem der vorhergehenden Ansprüche, dadurch gekennzeichnet, daß die Längen der Nebenkammer so gewählt sind, daß sie eine Bürsten mit Borsten formen, deren Länge längs des Stiels variiert.

12. Vorrichtung nach einem der vorhergehenden Ansprüche, dadurch gekennzeichnet, daß die Nebenkammern konisch sind, um eine Bürste mit konischen Borsten zu bilden.

13. Vorrichtung nach einem der vorhergehenden Ansprüche, dadurch gekennzeichnet, daß die Reihen von Nebenkammern so angeordnet sind, daß sie eine Bürste mit Borsten bilden, die von dem Stiel an über einen Winkel von mindestens 180° verteilten Stellen nach außen ragen.

14. Vorrichtung nach einem der Ansprüche 1 bis 12, dadurch gekennzeichnet, daß die Reihen von Nebenkammern so angeordnet sind, daß sie eine Bürste mit Borsten bilden, die von dem Stiel an über einen Winkel von 360° verteilten Stellen abstehen.

**Revendications**

1. Appareil pour la fabrication d'au moins une partie d'une brosse de maquillage miniature (10), laquelle comporte une tige (11) et plusieurs poils (13a à 13j) s'étendant sur la tige, vers l'extérieur de celle-ci et sous des angles différents, caractérisé par un moule (28) dans lequel le la matière plastique en fusion peut être injectée pour la formation de la brosse, ledit moule (28) comprenant une première et une seconde parties de moule (29, 30) délimitant entre elles une cavité de moulage principale (12') qui est allongée en vue de la formation de ladite tige (12) de la brosse, lesdites première et seconde parties de moule (29, 30) pouvant être éloignées l'une de l'autre pour permettre l'ouverture de ladite cavité principale (12') en vue du retrait d'une brosse finie; au moins une première desdites parties (29, 30) comprenant plusieurs éléments séparables (28a, 28b, 28d, 28e; 28f, 28g; 28i, 28j) qui sont immobilisés les uns par rapport aux autres, chacun desdits éléments séparables présentant une surface (72 à 79) qui s'étend sensiblement dans la direction longitudinale de ladite cavité principale (12') et qui est en butée contre une dite surface adjacente d'un dit élément voisin, les deux surfaces de chaque paire de surfaces en butée (72 à 79) délimitant entre elles une rangée de cavités secondaires (47 à 50) communiquant avec ladite cavité principale (12'), lesdites rangées de cavités secondaires (47 à 50) s'étendant vers l'extérieur de ladite cavité principale et sous des angles différents en vue de la formation desdites rangées de poils de ladite brosse; et des moyens (28c) pour engendrer un mouvement relatif d'éloignement entre une brosse finie (10) et ladite au moins première partie de moule (29, 30) munie desdits éléments maintenus immobiles les uns par rapport aux autres, en vue de retrait, hors desdites cavités secondaires (47 à 50), des poils (13a à 13j) de ladite brosse finie (10), lesdits éléments (28a à 28j) pouvant être séparés les uns des autres pour permettre l'extraction de poils cassés hors desdites cavités secondaires (47 à 50).

2. Appareil selon la revendication 1, caractérisé en ce que lesdits moyens destinés à engendrer un mouvement relatif d'éloignement comprennent un éjecteur (28c) monté déplaçable dans ladite au moins première partie (29).

3. Appareil selon la revendication 2, caractérisé en ce que ledit éjecteur (28c) présente des surfaces opposées (68, 69) qui coopèrent avec des surfaces adjacentes (64, 65) d'un premier et d'un second desdits éléments (28b, 28d) pour délimiter des rangées additionnelles de cavités secondaires (43, 44).

4. Appareil selon la revendication 3, caractérisé en ce que lesdites surfaces opposées (68, 69) dudit éjecteur (28c) sont sensiblement parallèles entre elles.

5. Appareil selon l'une quelconque des revendications précédentes, caractérisé en ce qu'au moins une rangée supplémentaire de cavités secondaires (41, 42) est définie entre les surfaces (60 à 63), coopérant entre elles, desdites première et seconde parties de moule (29, 30), quand le moule (28) est fermé.

6. Appareil selon la revendication 5, caractérisé en ce qu'il est prévu deux rangées supplémentaires (41, 42), lesdites deux rangées supplémentaires étant situées sur des côtés opposés de ladite cavité principale (12').

7. Appareil selon l'une quelconque des revendications précédentes, caractérisé en ce que ladite seconde partie de moule (30) comprend également plusieurs éléments séparables.

8. Appareil selon la revendication 7, caractérisé en ce que ladite seconde partie de moule comprend un dit élément (28h) présentant des surfaces opposées parallèles (70, 71) qui délimitent, avec des surfaces (66, 67) desdits éléments voisins (28g, 28i), des rangées additionnelles de cavités secondaires (45, 46), parallèles entre elles.

9. Appareil selon la revendication 8 lorsqu'elle est dépendante directement ou indirectement de la revendication 4, caractérisé en ce que les rangées additionnelles de cavités secondaires (43, 44) ménagées dans ladite première partie (29) sont situées en face des rangées additionnelles de cavités secondaires (45, 46) ménagées dans ladite seconde partie (30), lesdites rangées additionnelles étant disposées de telle façon que lesdites cavités secondaires (43, 44, 45, 46), qui les forment, s'étendent parallèlement à la direction du mouvement d'éloignement entre la brosse finie et chacune desdites parties de moule (29, 30).

10. Appareil selon l'une quelconque des revendications précédentes, caractérisé en ce que, dans chacune desdites rangées de cavités secondaires (43 à 50), l'une des surfaces (68 à 71, 76 à 79) qui la définissent est plane tandis que, dans l'autre (64 à 67, 72 à 75), est ménagée une rangée d'évidements destinée à former, conjointement avec ladite surface plane, lesdites cavités secondaires.

11. Appareil selon l'une quelconque des revendications précédentes, caractérisé en ce que lesdites cavités secondaires sont dimensionnées en longueur de façon à former une brosse possèdant des poils dont les longueurs varient le long de la tige.

12. Appareil selon l'une quelconque des revendications précédentes, caractérisé en ce que lesdites cavités secondaires sont effilées en vue de la formation d'une brosse à poils effilés.

13. Appareil selon l'une quelconque des revendications précédentes, caractérisé en ce que lesdites rangées de cavités secondaires sont positionnées de telle façon à former une brosse munie de poils s'étendant vers l'extérieur sur la tige, en des points répartis sur un arc d'au moins 180° environ.

14. Appareil selon l'une quelconque des revendications 1 à 12, caractérisé en ce que lesdites rangées de cavités secondaires sont positionnées de telle façon à former une brosse munie de poils s'étendant sur la tige, en des points répartis sur un arc de 360°.

FIG.1

FIG.2

0 075 051

FIG.3

FIG.4

FIG.5

# FIG.6

# FIG.7